# EUROPÄISCHE PATENTSCHRIFT

(11) **EP 0 523 536 B1**
(45) Veröffentlichungstag und Bekanntmachung des Hinweises auf die Patenterteilung: **27.11.1996**
(21) Anmeldenummer: 92111612.5
(22) Anmeldetag: 09.07.1992
(51) Int. Cl.: A01F 15/07, A01D 87/00, B30B 11/22

(54) **Verfahren und Vorrichtung zur Förderung des Zusammenhaltes eines unter Eigendrehung axial aus einem Pressraum austretenden Pressstranges**
Method and apparatus for improving the cohesion of a press strand leaving a pressbody with an own axial rotation
Méthode et appareil pour favoriser la cohésion d'un cordon pressé sortant d'une presse avec un mouvement axial

(30) Priorität: 10.07.1991 DE 4122858; 15.07.1991 DE 4122858
(43) Veröffentlichungstag der Anmeldung: 20.01.1993
(73) Patentinhaber: Wesche, Heiner, Prof. Dr.-Ing., D-50127 Bergheim (DE)
(72) Erfinder: Wesche, Heiner, Prof. Dr.-Ing., D-50127 Bergheim (DE)
(74) Vertreter: Einsel, Martin Dipl.-Phys.

(56) Entgegenhaltungen:
- EP-A- 0 366 936
- FR-A- 2 416 641
- FR-A- 2 498 880

## Beschreibung

Die Erfindung betrifft ein Verfahren und eine Vorrichtung zur Förderung des Zusammenhaltes eines unter Eigendrehung axial aus dem Preßraum einer nach dem Prinzip des Wickelpressens arbeitenden Presse für Halmgut oder anderes Material austretenden Preßstranges mit Hilfe eines den Preßstrang umgebenden Materials.

Verfahren und Vorrichtungen, um in kontinuierlichen Aufsammel-Preßverfahren hochverdichtete Halmgutballen herstellen zu können, sind bekannt (vgl. DE-38 37 230 A1 und EP 366 936 A2). Hierbei wird das Halmgut vom Boden kontinuierlich aufgenommen und einem Preßraum zugeführt, in dem das Gut zu einem rotierenden Preßstrang verdichtet wird, der unter Eigendrehung in seine eigene Achse mehr oder weniger stetig in axialer Richtung aus dem Preßraum austritt. Von dem voranlaufenden Ende des Preßstranges können mit geeigneten Mitteln mehr oder weniger kurze oder längere Preßstrangabschnitte abgetrennt werden. Bei den in den genannten Druckschriften beschriebenen Verfahren wird der Preßstrang, während er noch unter Radialdruck steht und axial vorgeschoben wird und vor dem Abtrennen eines Strangabschnittes mit einem unter Spannung zugeführten Bindemittel umwickelt. Dabei wird die Rotation des Preßstranges ebenso wie sein axialer Vorschub ausgenutzt, um selbsttätig eine schraubenförmige Umwicklung zu gewährleisten. Das Bindemittel kann schnurförmig oder bandförmig sein. Der Umwicklungsvorgang kann kontinuierlich oder diskontinuierlich erfolgen. Bei bandförmiger Ausbildung kann das Bindemittel in Form eines Folienbandes oder eines Nutzbandes ausgebildet sein (vgl. auch DE-Zeitschrift "Landtechnik" 5-91 Seiten 225 bis 229).

Aus der FR-A-24 98 880 ist eine Vorrichtung zum Sammeln und Pressen von auf dem Boden liegenden Ranken oder Schnittholz bekannt, bei welchen der dabei entstehende zylindrische Preßstrang mit einer schlauchartigen Hülle überzogen wird.

Da in der Praxis mit Unregelmäßigkeiten in der Halmgutzufuhr gerechnet werden muß, treten Schwankungen des Vorschubs des Preßstranges auf. Da gleichzeitig die Rotation des Preßstranges kontinuierlich und stetig verläuft, wird das Bindemittel in diesen bekannten Fällen ungleichförmig auf den Preßstrang gewickelt und es besteht die Gefahr, daß mehr Bindemittel verbraucht wird, als es zum gleichmäßigen Bewickeln des Preßstranges erforderlich ist. Um hier Abhilfe zu schaffen, ist es bekannt, das Bindemittel auf einer Trägerplatte zu lagern und diese rotierend anzutreiben, wobei eine Steuereinrichtung vorgesehen ist, welche über Meßfühler die axiale Bewegung des Preßstranges erfassen und entsprechend den Antrieb der Trägerplatte steuern kann (vgl. DE 40 30 091 A1).

Es ist Aufgabe der vorliegenden Erfindung, den Zusammenhalt eines solchen Preßstranges mit Hilfe eines den Preßstrang umgebenden Materials so zu gestalten, daß ohne Meßfühler und Steuereinrichtungen und ohne besondere Antriebe auch bei unsteter axialer Bewegung des Preßstranges eine gleichförmige Verteilung des den Preßstrang umgebenden Materials gewährleistet ist.

Diese Aufgabe wird durch die Lehre des Verfahrensanspruches 1 einerseits und durch die Lehre des Vorrichtungsanspruches 8 andererseits gelöst.

Im Gegensatz zu den bekannten Bindevorgängen, bei denen das Bindematerial um den Strang gewickelt werden muß, wird nach dem Verfahren gemäß Anspruch 1 der Preßstrang mit einem schlauchartigen Hüllmaterial überzogen, das in seiner Konsistenz und seinen Maßen auf den Preßstrang so angepaßt ist, daß es den gewünschten Zusammenhalt des Preßstranges auch nach dem Zerschneiden des Preßstranges in Abschnitte gewährleistet.

Um zu verhindern, daß das Hüllmittel bei Aufziehen auf den Preßstrang überhaupt oder in zu großem Maße verdreht wird, wird die bei Austritt des Preßstranges aus dem Preßraum vorliegende Relativdrehung zwischen Preßstrang und dem Hüllmittelvorrat im wesentlichen aufgehoben.

In besonders einfacher Weise gelingt dies, wenn man die drehbar gelagerte Hülse durch den Preßstrang selbst in Drehrichtung antreiben läßt, während die Hülse gegen axiales Mitbewegen mit dem Strang gesichert ist.

Weitere vorteilhafte Merkmale sind Gegenstand der Ansprüche 3 bis 7.

Eine besonders einfache Ausführungsform für eine Vorrichtung zum Ausführen des Verfahrens nach Anspruch 1 ist Gegenstand des Vorrichtungsanspruches 8. Die Hülse kann dabei frei drehbar gelagert und so geführt sein, daß sie zwar freie Drehbewegungen ausführen kann, gegen die Einwirkung axialer Kräfte jedoch entsprechend abgestützt ist.

Das neue Verfahren und die Vorrichtung zum Ausführen dieses Verfahrens sind besonders vorteilhaft für den Einsatz an landwirtschaftlichen Halmgutpressen geeignet, die nach dem Wickelprinzip und mit axialem Preßstrangaustritt arbeiten. Die Praxis hat gezeigt, daß, insbesondere dann, wenn man ein netzförmiges Hüllmittel verwendet, die Netzmaschen sich auf dem rauhen und unregelmäßigen Umfang des Preßstranges zuverlässig verhaken, so daß der Preßstrang bei seiner axialen Bewegung das Hüllmittel zuverlässig und gleichmäßig mitnimmt und von dem Hüllmittelvorrat abzieht.

Die Unteransprüche 10 bis 15 geben weitere wichtige Merkmale der Lehre des Anspruchs 8 wieder.

Ein besonderer Vorteil des neuen Verfahrens und der neuen Vorrichtung besteht darin, daß die Rotation des Preßstranges für den Umhüllungsvorgang keine Bedeutung hat, das Hüllmittel also nur in dem Maße automatisch verbraucht wird, in welchem sich der Preßstrang aus dem Preßraum axial heraus bewegt. Es besteht daher keinerlei Gefahr, daß die Umhüllung ungleichförmig ist oder zu viel Hüllmittel verbraucht wird, auch dann nicht, wenn die axiale Bewegung des Preßstranges in größerem Umfange unstetig und ungleichförmig erfolgt. Irgendwelcher Meßfühler oder Steuereinrichtungen bedarf der Gegenstand der Erfindung nicht. Dadurch wird die Vorrichtung auch wesentlich einfacher und preisgünstiger. Ebensowenig ist ein besonderer Antrieb für den Hüllmittelträger erforderlich, da die Hülse direkt von dem Preßstrang und im Maße seiner Drehung in Umfangsrichtung angetrieben wird. Ob und in welchem Umfange eine Relativdrehung zwischen Strang und Hülse beibehalten werden soll, kann leicht mit Hilfe einer die Drehbewegung der Hülse abbremsenden einstellbaren Einrichtung bestimmt werden.

Es ist zweckmäßig, wenn das Hüllmittel in Form eines Netzes ausgebildet wird und das Material das Netzes so gewählt bzw. die Maschen des Netzes gegenüber der Achse des Preßstranges so orientiert werden, daß durch radiales Aufweiten eine Verkürzung des Hüllmittels und durch axiales Strecken des Hüllmittels eine radiale Einschnürung erreicht werden kann. Dies ist vorteilhaft insoweit, als das das Hüllmittel im Vorrat ausgeweitet ist und so bei geringer Raumbeanspruchung eine große Hüllmittellänge im Vorrat gehalten werden kann. Beim Abziehen wird das Hüllmittel gestreckt und zieht sich daher unter radialer Vorspannung um den Strang, was den Zusammenhalt des Preßstranges noch weiter verbessert. Das Netzmaterial kann elastisch sein. Die Orientierung der Maschen wird zweckmäßig so gewählt, daß die Maschenfäden ca. 45° gegenüber der Preßstrangachse geneigt sind, wenn von einer quadratischen Netzmasche ausgegangen wird. Es sind aber auch andere Maschenformen, wie Wabenform, Rechtecke oder dgl. geeignet, insb. in Verbindung mit einem elastischen Netzmaterial. Die Umhüllung des Preßstranges läßt sich auch leicht und sicher entfernen.

Die Erfindung wird nachfolgend anhand schematischer Zeichnungen an einem Ausführungsbeispiel näher erläutert.

Es zeigen:
- Figur 1: einen Schnitt senkrecht zur Achse des Preßstranges durch die Vorrichtung gemäß der Erfindung, und zwar entlang der Schnittebene A-A der Figur 2;
- Figur 2: eine Draufsicht auf die Vorrichtung, bereichsweise in einem die Achse des Preßstranges enthaltenden Schnitt.

Die nach dem Prinzip des Wickelpressens arbeitende Strangpresse, der die Vorrichtung gemäß der Erfindung zugeordnet ist, ist nur andeutungsweise dargestellt. Sie umfaßt einen Preßsraum 11, der durch mehrere in Umfangsrichtung verteilte Preßwalzen 10 bestimmt ist. Die Anordnung ist so getroffen, daß das seitlich in Form eines Schwads oder dgl. zugeführte Halmgut durch die Preßwalzen zu einem Strang aufgewickelt und dabei verpreßt wird mit der Folge, daß der Strang im Maße der Materialzufuhr eine axiale Bewegung erhält. Bei gleichförmiger Gutzufuhr führt der Strang im wesentlichen eine gleichförmige Rotationsbewegung und eine gleichförmige axiale Wanderungsbewegung aus. Durch die axiale Bewegung wird der Preßstrang austrittsseitig aus dem Preßraum in Richtung seiner Längsachse herausbewegt. Die Ausbildung der Strangpresse ist für die Zwecke der Erfindung nicht kritisch. Wesentlich ist lediglich, daß die Strangpresse einen Preßstrang erzeugt, der unter Eigendrehung axial aus einem Preßraum austritt. Im Abstand vom Austritt ist üblicherweise eine Trenneinrichtung zum Abtrennen von Strangabschnitten vorgesehen.

Um den Zusammenhalt des Preßstranges auf einfache und sichere Weise zu gewährleisten wird ein in Umfangsrichtung verknüpftes oder geschlossenes Hüllmittel 2 vorgesehen. Dieses wird gleichmäßig und im Maße des axialen Vorschubes des Preßstranges 1 auf diesen aufgezogen, sobald der Preßstrang aus dem Preßraum austritt. Zu diesem Zweck ist am Ausgang des Preßsraumes 11 und konzentrisch zu der Achse, entlang der der Preßstrang austritt, eine Hülse 3 vorgesehen. Diese Hülse ist frei drehbar auf die Hülse tragenden und radial zentrierenden Führungs- oder Stützrollen 4 frei drehbar gelagert, während Rollen 5 in Verbindung mit entsprechenden Umfangsflanschen auf der Hülse die axiale Lage der Hülse gegenüber dem Austritt des Preßraumes sichern, ohne die freie Drehung der Hülse zu beeinträchtigen. Im dargestellten Beispiel weist die Hülse 3 einlaufseitig einen konischen Einlaufabschnitt auf, der das Eintreten des aus dem Preßraum 11 austretenden Preßstranges erleichert. Im Inneren der Hülse 3 sind mehrere in Umfangsrichtung verteilte und sich axial erstreckende Gleitschienen oder Gleitstäbe 6 vorgesehen. Die Anordnung ist so getroffen und in Bezug auf den Durchmesser des Preßstranges so bemessen, daß der Preßstrang seine Rotationsbewegung über die Gleitschienen 6 antriebsmäßig auf die Hülse 3 übertragen kann. Dadurch wird bei Austritt des Preßstranges aus dem Preßraum die Relativdrehung zwischen Preßstrang und der Hülse 3 und damit auch gegenüber einem auf der Hülse 3 angeordneten Hüllmittelvorrat 2 aufgehoben. Der Umhüllungsvorgang steuert sich so vollkommen selbsttätig. Die dazu vorgesehene Vorrichtung zeichnet sich durch einen einfachen und funktionssicheren Aufbau aus.

Der Umhüllungsvorgang wird folgendermaßen eingeleitet:

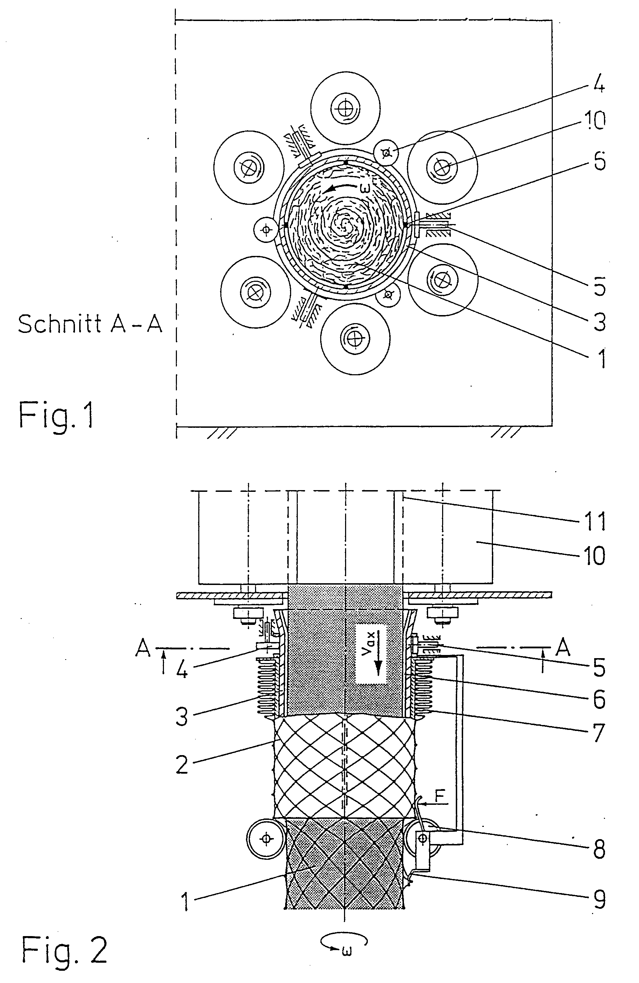

Der aus dem Preßraum austretende rotierende Preßstrang tritt in die Hülse 3 und setzt diese mit dem Hüllmittelvorrat in entsprechende Rotationsbewegung. Wenn der Preßstrang die Hülse 3 durchlaufen hat verhakt sich beim Austritt des Preßstranges aus der Hülse das Hüllmittel, welches im dargestellten Beispiel als Schlauchnetz 2 ausgebildet ist, auf dem unregelmäßigen Umfang des Preßsstranges, so daß der Preßstrang bei seiner axialen Bewegung und im Maße dieser Bewegung das Hüllmittel von dem Vorrat und von der Hülse abzieht. Das Verhaken auf dem Umfang des Preßstranges kann durch eine Andruckvorrichtung 8 unterstützt werden. Diese besteht aus im Bereich des Auslaufendes der Hülse angeordneten, in Umfangsrichtung verteilte Andruckrollen 8, die mit einstellbarer Vorspannung auf dem Umfang des Preßstranges anliegen und das von der Hülse abgleitende Hüllmaterial auf dem Preßstrang andrücken. Die Andruckelemente 8 können, wie in der Figur 2 angedeutet, auf der Hülse oder gestellfest unterstützt sein. Im Bereich des Austrittsendes der Hülse können weiterhin eine oder mehrere in radialer Richtung elastisch bewegliche Andrückfinger vorgesehen sein, welche mit einer, vorzugsweise einstellbaren, elastischen Vorspannung F am Umfang der Hülse anliegen und so mit einstellbarer Bremskraft das Abziehen des Hüllmaterials von der Hülse abbremsen. Weiterhin kann im Bereich der Andrückvorrichtung ein Netzhaken 9 vorgesehen sein, auf den eine Anfangsmasche des Netzvorrates vor Beginn eines Umhüllungsvorganges aufgehakt wird, um so den Netzanfang zuverlässig in einer Bereitschaftsstellung zu halten, in der der Netzanfang vom Preßstrang leicht und sicher erfaßt werden kann. Das Hüllmittel oder das Schlauchnetz 2 ist im gerafften Zustand als Vorrat 7 auf dem Außenumfang der Hülse 3 angeordnet. Durch die rauhe Oberfläche des Stranges und unterstützt durch das Aufwalzen des Hüllmittels durch die Andruckvorrichtung 8 wird sichergestellt, daß sich das Netz nicht wieder axial unter Aufweitung zusammenziehen kann.

Die Gleitschienen 6 können in der Hülse auch in radialer Richtung elastisch nachgebend angeordnet sein, um Unregelmäßigkeiten des Strangumfanges Rechnung zu tragen. In jedem Fall dienen die Gleitschienen dazu, den noch nicht umhüllten Preßstrang radial zusammenzuhalten und ihn radial unter Vorspannung zu setzen. Sie tragen somit zur Formstabilisierung des Preßstranges bis zu seiner Umhüllung bei.

Die Anordnung kann abweichend von dem dargestellten Ausführungsbeispiel auch so getroffen sein, daß das Hüllmittel von dem auf der Hülse vorgesehen Hüllmittelvorrat über den Eintritt der Hülse mit dem Preßstrang gemeinsam in die Hülse gezogen wird. In dem Fall tragen, insb. elastisch gelagerte, Gleitschienen 6 zur Anpressung des Hüllmittels auf den Umfang des Preßstranges bei. Diese Anordnung unterstützt zugleich auch die axiale Dehnung des Hüllmittels unmittelbar bei Aufziehen auf den Preßstrang.

Aus dem Vorstehenden ist ersichtlich, daß die Vorrichtung nicht nur zum Umhüllen eines Preßstranges aus Halmgut sondern auch für Preßstränge aus anderem Material geeignet ist. Voraussetzung ist lediglich, daß es sich um einen unter Eigendrehung axial bewegenden Preßstrang handelt, der eine das Verhaken des Hüllmittels 2 auf der Strangoberfläche ermöglichende Umfangsfläche aufweist.

## Patentansprüche

1. Verfahren zur Förderung des Zusammenhaltes eines unter Eigendrehung axial aus dem Preßraum einer nach dem Prinzip der Wickelpressung arbeitenden Presse für Halmgut oder anderes Material austretenden Preßstranges mit Hilfe eines den Preßstrang umgebenden Materials,
**dadurch gekennzeichnet,**
daß der Preßstrang im Maße seiner axialen Austrittsbewegung aus dem Preßraum mit einem in Umfangsrichtung geschlossenen Hüllmittel überzogen wird, und daß die bei Austritt aus dem Preßraum vorliegende Relativdrehung zwischen dem Preßstrang und einem in Bereitschaft gehaltenen Hüllmittelvorrat spätestens mit Beginn des Umhüllungsvorganges im wesentlichen aufgehoben wird.

2. Verfahren nach Anspruch 1,
**dadurch gekennzeichnet,**
daß man den Hüllmittelvorrat auf einer gegenüber dem Preßstrang axial unbeweglich gehaltenen Hülse oder dergleichen in Bereitschaft hält und die Hülse durch den rotierenden Preßstrang in Drehung versetzen läßt.

3. Verfahren nach Anspruch 2,
**dadurch gekennzeichnet,**
daß das Hüllmaterial im Maße der axialen Relativbewegung zwischen Preßstrang und Hülse vom Hüllmaterialvorrat ab- und über den Preßstrang gezogen wird.

4. Verfahren nach Anspruch 3,
**dadurch gekennzeichnet,**
daß man das Hüllmaterial zusammen mit dem Preßstrang in die Hülse einführt.

5. Verfahren nach Anspruch 3,
**dadurch gekennzeichnet,**
daß man das Hüllmaterial durch den Preßstrang unter Ausnutzung seiner axialen Bewegung aus der Hülse heraus von der Hülse abziehen läßt.

6. Verfahren nach einem der Ansprüche 1 bis 5,
**dadurch gekennzeichnet,**
daß als Hüllmaterial ein Schlauchnetz verwendet wird.

7. Verfahren nach Anspruch 6,
**dadurch gekennzeichnet,**
daß das Schlauchnetz so, insbesondere elastisch, ausgebildet und/oder im Vorrat auf der Hülse mit seinen Maschen orientiert in Bereitschaft gehalten wird, daß es während des Überziehens über den Preßstrang axial gedehnt und zugleich radial eingeschnürt wird.

8. Vorrichtung zum Ausführen des Verfahrens nach Anspruch 1, welcher einer nach dem Prinzip des Wickelpressens arbeitenden Strangpresse zugeordnet ist, welche einen Preßraum mit Preß- und Wickelorganen aufweist, denen das zu pressende Gut zuführbar ist und von denen es in Form eines um seine Achse rotierenden und sich, gegebenenfalls unstetig, axial bewegenden Preßstranges durch eine Austrittsöffnung des Preßraumes nach außen gefördert wird,
**dadurch gekennzeichnet,**
daß dem Austritt aus dem Preßraum (11) eine gleichachsig mit dem Austritt angeordnete, drehbare Hülse (3) mit einer dem Durchmesser des Preßstranges (1) angepaßten lichten Weite zugeordnet ist, daß die Hülse (3) als Träger für einen Hüllmittelvorrat (2) ausgebildet ist, und daß die Anordnung so getroffen ist, daß der Anfang des Hüllmittelvorrates (2) von dem Preßstrang (1) bei seinem Eintritt in die Hülse, seinem Durchgang durch die Hülse oder bei seinem Austritt aus der Hülse erfaßbar ist.

9. Vorrichtung nach Anspruch 8,
**dadurch gekennzeichnet,**
daß die Hülse (3) frei drehbar gelagert ist, einen Einlaufabschnitt für den Preßstrang (1) sowie einen Mitnehmerabschnitt aufweist, dessen lichte Weite zur Erzeugung eines Reibungsmitnahmeschlusses in Drehrichtung zwischen Preßstrang und Hülse bemessen ist.

10. Vorrichtung nach Anspruch 8 oder 9,
**dadurch gekennzeichnet,**
daß die Anordnung so getroffen ist, daß bei Drehantrieb der Hülse (3) durch den Preßstrang (1) eine vorbestimmte Relativdrehung zwischen diesen beiden erhalten bleibt.

11. Vorrichtung nach einem der Ansprüche 8 bis 10,
**dadurch gekennzeichnet,**
daß auf der Innenfläche der Hülse (3) mehrere in Umfangsrichtung verteilt angeordnete, sich axial erstreckende und in Reibungsschluß in Drehrichtung mitbestimmende Gleitschienen oder -stäbe (6) vorgesehen sind.

12. Vorrichtung nach Anspruch 11,
**dadurch gekennzeichnet,**
daß die Schienen oder Stäbe (6) in radialer Richtung elastisch nachgebend in der Hülse (3) angeordnet sind.

13. Vorrichtung nach einem der Ansprüche 8 bis 12,
**dadurch gekennzeichnet,**
daß am Ausgang der Hülse (3) eine odere mehrere, das Hüllmaterial radial auf den Umfang des Preßstranges andrückende Andrückelemente (8) vorgesehen sind.

14. Vorrichtung nach Anspruch 13,
**dadurch gekennzeichnet**,
daß die Andrückelemente zugleich als das Abziehen des Hüllmittels (2) von der Hülse (3) abbremsende Andrückrollen (8) ausgebildet sind.

15. Vorrichtung nach einem der Ansprüche 8 bis 14,
**dadurch gekennzeichnet**,
daß - in Vorschubrichtung des Preßstranges (1) gesehen - im Abstand von dem Austritt der Hülse (3) ein Halteelement (9) vorgesehen ist, welches bei Beginn jedes Hüllvorganges den Hüllmittelanfang in einer Bereitschaftsstellung hält.

## Claims

1. Method of promoting the coherence of baled extrusion, which emanates with intrinsic rotation axially from the baling chamber of a baler for crop material or other material operating on the roll-baling principle, with the aid of a material which surrounds the pressed extrusion,
**characterised in that**,
the baled extrusion in the course of its axial delivery from the baling chamber is covered by an enveloping means which is closed in a peripheral direction, and that the relative rotation occurring upon delivery from the baling chamber between the baled extrusion and an enveloping means supply held in readiness is substantially cancelled at the latest with the start of the enveloping process.

2. Method according to claim 1,
**characterised in that**
the enveloping means supply is held in readiness on a sleeve or the like, which is held axially immovably relative to the baled extrusion, and the sleeve may be set in rotation by the rotating baled extrusion.

3. Method according to claim 2,
**characterised in that**
the enveloping material in the course of the axial relative movement between baled extrusion and sleeve is withdrawn from the enveloping material supply and drawn over the baled extrusion.

4. Method according to claim 3,
**characterised in that**
the enveloping material is introduced together with the baled extrusion into the sleeve.

5. Method according to claim 3,
**characterised in that**
the enveloping material may be withdrawn from the sleeve by the baled extrusion utilizing the axial movement of said extrusion out of the sleeve.

6. Method according to claims 1 to 5,
**characterised in that**
a tubular net is used as an enveloping material.

7. Method according to claim 6,
**characterised in that**
the tubular net is of such an, in particular elastic, nature and/or is held in readiness in the supply on the sleeve with its mesh oriented in such a way that, as it is drawn over the baled extrusion, it is axially stretched and at the same time radially constricted.

8. Device for effecting the method according to claim 1, which is associated with extrusion baler operating on the roll-baling principle, which comprises a baling chamber with baling and rolling elements, to which the material to be baled may be supplied and which delivers said material in the form of a baled extrusion rotating about its axis and moving, possibly discontinuously, in an axial direction outwards through an outlet opening of the baling chamber,
**characterised in tha**t
associated with the outlet from the baling chamber (11) is a rotatable sleeve (3) disposed coaxially with the outlet and having a clear width adapted to the diameter of the baled extrusion (1), that the sleeve (3) is designed as a carrier for an enveloping means supply (2), and that the arrangement is such that the end of the enveloping means supply (2) is engageable by the baled extrusion (1) upon its entry into the sleeve, its passage through the sleeve or its discharge from the sleeve.

9. Device according to claim 8,
**characterised in that**
the sleeve (3) is supported in a freely rotatable manner and comprises a run-in portion for the baled extrusion (1) as well as a driver portion, the clear width of which is dimensioned in such a way as to produce a frictional driving lock in the direction of rotation between the baled extrusion and the sleeve.

10. Device according to claim 8 or 9,
**characterised in that**
the arrangement is such that, when the sleeve (3) is set in rotation by the baled extrusion (1), a predetermined relative rotation is maintained between said sleeve and said extrusion.

11. Device according to one of claims 8 to 10,
**characterised in that**
the inner surface of the sleeve (3) is provided with a plurality of sliding rails or bars (6), which are arranged distributed in a peripheral direction, extend axially and ensure frictional engagement in the direction of rotation.

12. Device according to claim 11,
**characterised in that**
the rails or bars (6) are disposed so as to be elastically resilient in a radial direction in the sleeve (3).

13. Device according to one of claims 8 to 12,
**characterised in that**
provided at the outlet of the sleeve (3) is one or more contact pressure elements (8) which press the enveloping material radially onto the periphery of the baled extrusion.

14. Device according to claim 13,
**characterised in that**
the contact pressure elements simultaneously take the form of contact pressure rollers (8( which brake the withdrawal of the enveloping means (2) from the sleeve (3).

15. Device according to one of claims 8 to 14,
**characterised in that**
provided at a distance - viewed in the feed direction of the baled extrusion (1) - from the outlet of the sleeve (3) is a holding element (9) which at the start of each enveloping process holds the start of the enveloping means in a stand-by position.

## Revendications

1. Procédé pour favoriser la solidarisation, à l'aide d'un matériau entourant le boudin comprimé, d'un boudin comprimé sortant axialement, sous sa propre rotation, de la chambre de pressage d'une presse pour de la paille ou autres produits qui travaille selon le principe du pressage en enroulement, **caractérisé** en ce que le boudin comprimé est revêtu dans la mesure de son mouvement axial de sortie de la chambre de pressage d'un moyen de gainage fermé en direction circonférentielle, et en ce que la rotation relative, existante à la sortie de la chambre de pressage entre le boudin comprimé et une réserve de moyen de gainage maintenue disponible, est pour l'essentiel supprimée au plus tard au début du processus de gainage.

2. Procédé selon la revendication 1, **caractérisé** en ce qu'on maintient disponible la réserve de moyen de gainage sur un manchon ou similaire maintenu axialement immobile par rapport au boudin comprimé, et on laisse le boudin comprimé rotatif faire tourner le manchon.

3. Procédé selon la revendication 2, **caractérisé** en ce que le matériau de gainage est soutiré de la réserve de matériau de gainage et tiré sur le boudin comprimé dans la mesure du mouvement axial relatif entre le boudin comprimé et le manchon.

4. Procédé selon la revendication 3, **caractérisé** en ce qu'on introduit le matériau de gainage conjointement avec le boudin comprimé dans le manchon.

5. Procédé selon la revendication 3, **caractérisé** en ce qu'on laisse le boudin comprimé retirer le matériau de gainage du manchon en utilisant le déplacement axial du boudin hors du manchon.

6. Procédé selon l'une des revendications 1 à 5, **caractérisé** en ce qu'on utilise comme matériau de gainage un treillis tubulaire.

7. Procédé selon la revendication 6, **caractérisé** en ce que le treillis tubulaire est conçu de telle sorte, notamment élastique, et/ou maintenu disponible dans la réserve sur le manchon avec ses mailles orientées de telle sorte que, pendant le recouvrement sur le boudin comprimé, il est étiré axialement et simultanément contracté radialement.

8. Dispositif pour la mise en oeuvre du procédé selon la revendication 1, qui est associé à une boudineuse travaillant selon le principe du pressage en enroulement et présentant une chambre de pressage avec des organes de pressage et d'enroulement, auxquels peut être apporté le produit à comprimer et qui font avancer ce dernier vers l'extérieur, par une ouverture de sortie de la chambre de pressage, sous la forme d'un boudin comprimé rotatif autour de son axe et se déplaçant axialement éventuellement de façon discontinue,
**caractérisé** en ce qu'est associé à la sortie de la chambre de pressage (11) un manchon rotatif (3), disposé coaxialement à la sortie et présentant un diamètre intérieur adapté au diamètre du boudin comprimé (1), en ce que le manchon (3) est conçu comme support pour une réserve de moyen de gainage (2), et en ce que l'agencement est conçu de telle sorte que le début de la réserve de moyen de gainage (2) peut être pris par le boudin comprimé (1) lors de son entrée dans le manchon, de son passage à travers le manchon ou de sa sortie du manchon.

9. Dispositif selon la revendication 8, **caractérisé** en ce que le manchon (3) est monté librement rotatif, et présente un tronçon d'introduction pour le boudin comprimé (1) ainsi qu'un tronçon entraîneur, dont le diamètre intérieur est dimensionné de façon à produire un entraînement par friction dans la direction de rotation entre le boudin comprimé et le manchon.

10. Dispositif selon la revendication 8 ou 9, **caractérisé** en ce que l'agencement est conçu de telle sorte que, lors de l'entraînement en rotation du manchon (3) par le boudin comprimé (1), une rotation relative prédéterminée est maintenue entre ces deux éléments.

11. Dispositif selon l'une des revendications 8 à 10, **caractérisé** en ce que sont prévus, sur la surface intérieure du manchon (3), plusieurs rails ou barres de glissement (6) qui sont répartis en direction circonférentielle, s'étendent axialement et codéterminent l'engagement par friction dans la direction de rotation.

12. Dispositif selon la revendication 11, **caractérisé** en ce que les rails ou barres (6) sont disposés dans le manchon (3) à fléchissement élastique en direction radiale.

13. Dispositif selon l'une des revendications 8 à 12, **caractérisé** en ce qu'un ou plusieurs éléments de pression (8), pressant le matériau de gainage radialement en application sur la circonférence du boudin comprimé, sont prévus à la sortie du manchon (3).

14. Dispositif selon la revendication 13, **caractérisé** en ce que les éléments de pression sont simultanément conçus comme galets de pression (8) qui freinent le soutirage du moyen de gainage (2) du manchon (3).

15. Dispositif selon l'une des revendications 8 à 14, **caractérisé** en ce qu'un élément de maintien (9) est prévu, vu dans la direction d'avancement du boudin comprimé (1), à distance de la sortie du manchon (3), élément qui, au début de chaque processus de gainage, maintient le début du moyen de gainage dans une position de disponibilité.
